Europäisches Patentamt

European Patent Office

Office européen des brevets

(11) Publication number: **0 079 176**
**A2**

(12) **EUROPEAN PATENT APPLICATION**

(21) Application number: **82305734.4**

(22) Date of filing: **28.10.82**

(51) Int. Cl.³: **F 16 H 3/08**

(30) Priority: **06.11.81 GB 8133607**

(43) Date of publication of application:
**18.05.83 Bulletin 83/20**

(84) Designated Contracting States:
**AT DE IT**

(71) Applicant: **The Secretary of State for Defence in Her Britannic Majesty's Government of The United Kingdom of Great Britain and Northern Ireland Whitehall London SW1A 2HB(GB)**

(72) Inventor: **McGuigan, Stuart James 1 Castle Crescent Shellingford Faringdon Oxfordshire(GB)**

(74) Representative: **Miller, Ronald Anthony et al, Procurement Executive, Ministry of Defence Patents 1A4, Room 2014 Empress State Building Lillie Road London SW6 1TR(GB)**

(54) Improvements in gearboxes.

(57) A compact gearbox particularly suitable for motorcycles and vehicles with transverse engines, the gearbox having twin lay shafts, each carrying different gears but both meshing simultaneously and continuously with either the output or input drives or one with one and one with the other.

*Fig. 1*

EP 0 079 176 A2

1

# IMPROVEMENTS IN GEARBOXES

The present invention is concerned with gearboxes. It is particularly concerned with the provision of a compact gearbox suitable for use in motorcycles and transverse engine vehicles.

In most vehicle gear boxes there has been for many years a single drive shaft and a single lay shaft for all forward gears, an arrangement which has been generally satisfactory for road vehicles requiring 3-5 gears. Competition and goods vehicles require more gears the provision of which tends to lengthen the gearbox. However when the competition vehicle is a motorcycle, especially a single cylinder motorcycle with particular flywheel requirements, there are apt to be constraints upon the permitted length of a gearbox. By the present invention is provided a compact gearbox particularly suitable for use in competition motorcycles.

According to the present invention a gearbox having an input drive gear, an output drive gear and two lay shafts is characterised in that each lay shaft carries at least one gear differing from any on the other and in that integral gears on both lay shafts mesh simultaneously with either the input drive gear, or the output drive gear, or one with the input drive gear and one with the output drive gear. Preferably both mesh with the output drive gear, since the lay shaft will not rotate when neutral, or no gear, is engaged, and bearing and gear wear will thus be minimised.

2

Gearboxes for vehicles with a relatively high power-to-weight ratio, are usually arranged with the ratios of the higher gears more closely spaced than those of the lower gears. This is because at high speeds, the total tractive resistance increases rapidly due to the effect of aerodynamic forces. The driver then requires better filling of the power/speed envelope than at low speeds when the resistance to motion is low, and large reserves of power are available for acceleration.

A suitable choice is to arrange the intermediate gear ratios such that the difference in road speed at maximum engine speed in adjacent gears is always about the same.

eg   For a five speed gearbox:

Maximum speed in top gear = 120 mile/hr

                    4th gear = 100 mile/hr

                    3rd gear =  80 mile/hr

                    2nd gear =  60 mile/hr

                    1st gear =  40 mile/hr

Ratios which approximate to this condition may be determined from the following expressions:

Four speed gearbox:

                Top 1

                3rd $3R/(2R+1)$

                2nd $3R/(R+2)$

                1st R

Five speed gearbox:

                Top 1

                4th $4R/(3R+1)$

                3rd $4R/(2R+2)$

                2nd $4R/(R+3)$

                1st R

Closer spacing of the upper gear ratios in this manner also means that when making a down change prior to a high speed overtaking manoeuvre, a greater reserve of speed is available in the new gear to complete the manoeuvre without a further gear change.

3

A twin lay shaft arrangement in accordance with the present invention is particularly advantageous where a five or more speed, preferably an odd number, gearbox is required, because with top gear at a 1:1 ratio and therefore accomplished by means of an overdrive or straight through engagement, a symmetrical arrangement of the gearshafts can be arrived at, for example, by employing profile shift as between the different permanently meshed lay-shaft-to-input/output gears. This enables the axial length of the gearbox and thus the bending moments and deflections of the shafts to be kept low. With the lay shafts arranged substantially opposite one another in relation to the main shaft, wear and bending moments on the shafts, and material and gearbox weight and overall bulk can be minimised. Gearboxes in present invention are thus practical, suitable for competition motorcycles, but are also of value to car-type vehicles with transverse engines.

Profile shift is described in Book 1 of the 1970 I Mech I Conference on Drive Line Engineering, and refers to a method of modifying gear ratio between gears at fixed pitch circle diameters by varying the number of gear teeth employed.

In the motorcycle and light vehicle context a typical bottom gear reduction (with respect to a top gear correctly selected to achieve maximum road speed) lies between 2.4 and 3..6:1. The present invention permits vehicle gearboxes to be constructed which have such a bottom gear reduction ratio, and intermediate gear ratios substantially in accordance with those hereinbefore formulated, by the employment of suitably profile shifted gears.

Gear changing can be accomplished by known cam plate techniques and other sequencing devices.

Two gearboxes in accordance with the present invention will now be described by way of example with reference to the accompanying drawings, of which:

4

Figure 1 is a cross section of the interior of a first motorcycle gearbox,

Figure 2 is a cross section of the interior of a second motorcycle gearbox,

Figure 3 is a plan of a gear change cam plate,

Figure 4 is a section of the cam plate of figure 3 together with gear shifts, and

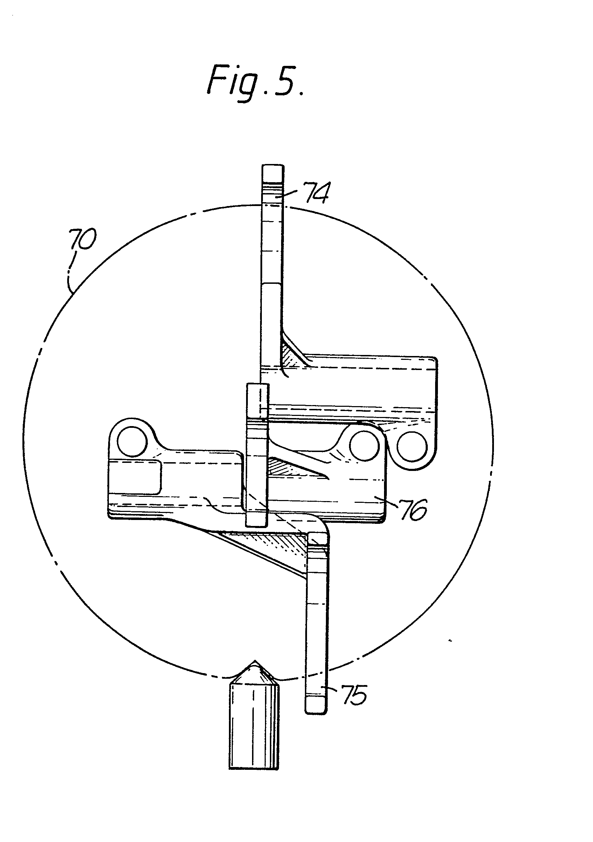

Figure 5 is a plan of the view shown in figure 4.

The gearboxes illustrated in the drawings are both five-speed gearboxes having a main input shaft 50 and an output drive comprising a sleeve 51 carrying a gear 51a and a chain sprocket 51b. Twin layshafts 52 and 53 have integral gears 52a, 53a meshing simultaneously with the final gear 51. A fixed input gear 50a on the shaft 50 meshes with a first gear 54 and a second gear 55 which are freely rotatable on the lay shafts 53 and 52 respectively, while a fifth gear 56 mounted longitudinally slidable but fixedly rotatable on the input shaft 50 meshes with a third gear 57 and a fourth gear 58 which are freely rotatable on the layshafts 53 and 52 respectively. The fifth gear 56 carries integral dogs 56a for meshing with mating dogs 51c which is integral with the output sleeve 51, and also a gear shift groove 56b. The layshafts 52 and 53 carry sliding dog devices 59 and 60 respectively.

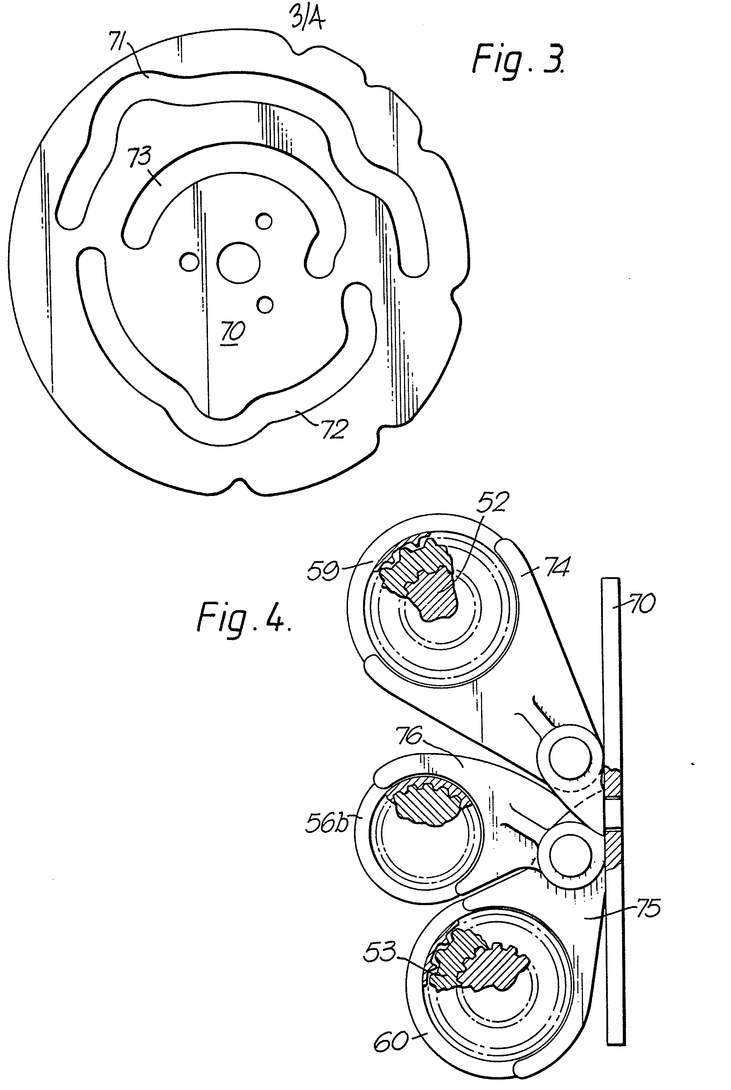

The gear change means include a cam plate 70 as shown in figure 3 having channels 71, 72 and 73 for the layshafts 52 and 53 and the fifth gear 56 respectively. Selectors 74, 75, 76 follow the channels 71, 72, 73 respectively and operate on the gear connectors 59 and 60 and the groove 56b respectively.

The gearboxes operate in time honoured fashion, with input drive from the shaft 50 going via the gears 50a or 56 to the free gears, 54, 55, 57 and 58. When any one of first

5

to fourth gears is selected by appropriate rotation of the cam plate 70 one of the selectors 74 to 75 arranges for one of the gears 54, 55, 57 and 58 to be placed by one of the connectors 59, 60 into driving relationship with its layshafts 52, 53, whence the drive is communicated via one of the gears 52a, 53a to the output drive 51. To engage fifth gear the selector 76 shifts the gear 56a into engagement with that 51c on the output sleeve 51.

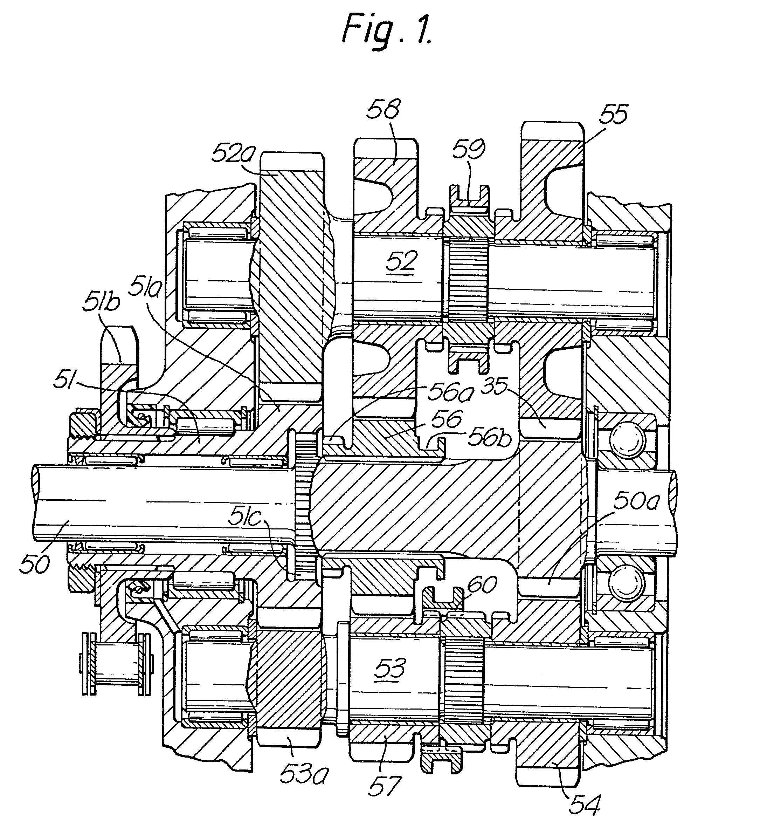

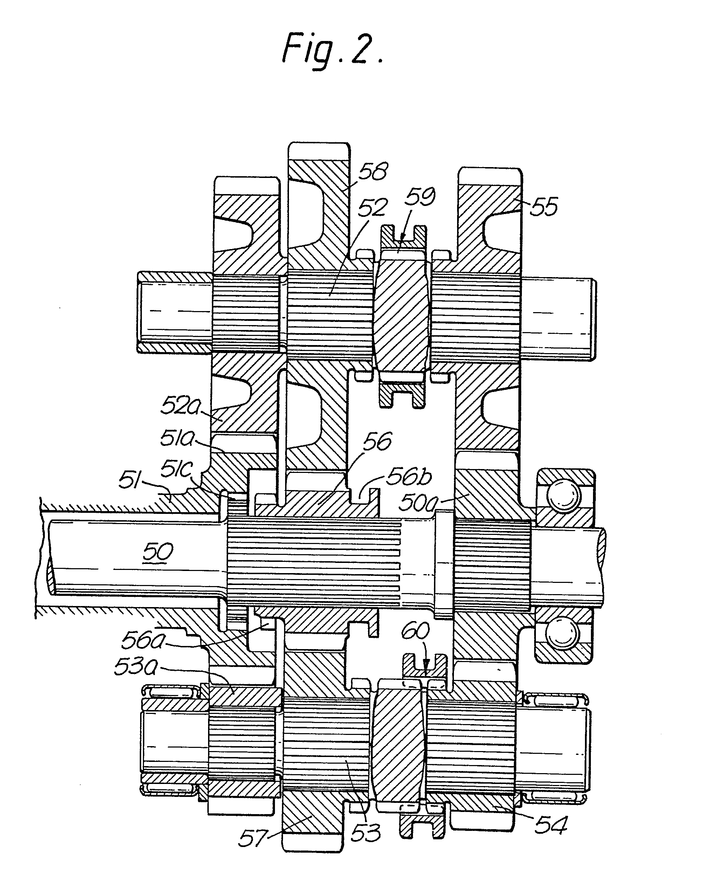

Figures 1 and 2 show third gear engaged.

In both figures 1 and 2 the number of teeth on each gear is indicated. The gear ratios in a specific example of a figure 2 gearbox, and their theoretical counterparts are:

| | | |
|-----|-------|-------|
| 1st | 2.526 | |
| 2nd | 1.854 | 1.828 |
| 3rd | 1.440 | 1.433 |
| 4th | 1.192 | 1.178 |
| 5th | 1.0 | |

It will be appreciated that profile shift has been employed on some of the gears.

It will also be appreciated that in the present patent specification the word 'integral' as referring to a relationship between a gear and a shaft, includes a gear fixed on the shaft to rotate therewith as well as one formed on the shafting.

1

## CLAIMS

1. The gearbox having an input drive gear, an output drive gear and two lay shafts, characterised in that each lay shaft carries at least one gear differing from any on the other and in that integral gears on both lay shafts mesh simultaneously with either the inpud drive gear or the output drive gear, or one with the input drive gear and one with the output drive gear.

2. A gearbox as claimed in claim 1 and which is a four speed gearbox characterised in that the ratios are determined from the following expressions:

| Four speed gearbox: | Top | 1 |
|---|---|---|
| | 3rd | $3R/(2R+1)$ |
| | 2nd | $3R/(R+2)$ |
| | 1st | R |

where R is the chosen first gear ratio.

3. A gearbox as claimed in claim 1 and which is a five speed gearbox, characterised in that the ratios are determined from the following expression:

| Five speed gearbox: | Top | 1 |
|---|---|---|
| | 4th | $4R/(3R+1)$ |
| | 3rd | $4R/(2R+2)$ |
| | 2nd | $4R/(R+3)$ |
| | 1st | R |

where R is the chosen first gear ratio.

4. A gearbox as claimed in any one of claims 1 to 3 and characterised in that the lay shafts are arranged substantially opposite one another in relation to the main shaft.

5. A gearbox as claimed in any one of the preceding claims and wherein at least one of the gears incorporates profile shift with respect to at least one of the others.

6. A competition motorcycle having a gearbox as claimed in any one of the preceding claims.

*Fig . 1.*

# Fig. 2.

3/4

Fig. 3.

71

73

70

72

Fig. 4.

52

59

74

70

76

56b

75

53

60

# Fig.5.